# EUROPÄISCHE PATENTSCHRIFT

(11) **EP 2 383 169 B1**
(45) Veröffentlichungstag und Bekanntmachung des Hinweises auf die Patenterteilung: **31.07.2019**
(21) Anmeldenummer: 11002519.4
(22) Anmeldetag: 26.03.2011
(51) Int. Cl.: B62D 21/04, B62D 21/09, B62D 21/18, B62D 25/08

(54) **Nutzfahrzeug mit Querträger und darauf montierter Kühler**
Commercial vehicle with cross-member supporting a cooling unit
Véhicule utilitaire doté d'une traverse soutenant un refroidisseur

(30) Priorität: 30.04.2010 DE 102010018886
(43) Veröffentlichungstag der Anmeldung: 02.11.2011
(73) Patentinhaber: MAN Truck & Bus SE, 80995 München (DE)
(72) Erfinder: Beck, Klaus, 82278 Althegnenberg (DE); Butscher, Jochen, 82288 Kottgeisering (DE)
(74) Vertreter: v. Bezold & Partner Patentanwälte - PartG mbB

(56) Entgegenhaltungen:
- DE-A1- 4 006 418
- DE-A1-102008 023 133
- JP-A- 2007 137 224

## Beschreibung

Die Erfindung bezieht sich auf ein Nutzfahrzeug mit zwei Fahrgestell-Längsträgern, die durch Querträger mit einander verbunden sind, und vor denen quer zur Fahrtrichtung ein Kühler angeordnet ist.

Aus dem Stand der Technik ist die DE 10 2008 039 949 A1 bekannt, die einen Querträger für ein Fahrzeug, insbesondere ein Nutzfahrzeug umfasst, der ein erstes Verbindungselement aufweist, mittels welchem der Querträger mit einem ersten Längsträger verbindbar ist. Ein zweites Verbindungselement ist zusätzlich vorgesehen, mittels welchem der Querträger mit einem zweiten Längsträger verbindbar ist. Zusätzlich ist ein Verbindungsstück vorgesehen, dass zwischen den beiden Verbindungselementen angeordnet ist und diese miteinander verbindet. Der Querträger ist dabei einstöckig ausgebildet.

Ferner ist die DE 40 06 418 A1 bekannt, die einen Lkw mit einem Tragrahmen offenbart, der ein hieran befestigtes Vorderwagenmodul aufweist und zwei Kühler-Gebläse-Einheiten sowie eine Schleppkupplung aufweist. Aus der DE 10 2008 023 133 A1 ist ein Nutzfahrzeugfahrgestellrahmen mit zwei Längsträgern bekannt, an deren vorderen Enden ein Kühler einer Motokühlanlage angeordnet ist.

Es ist die Aufgabe der Erfindung ein Nutzfahrzeug mit einem Fahrgestellrahmen bereitzustellen, bei dem die Einrichtungen zur Übertragung von Crash- und Abschleppkräften auf den Fahrgestellrahmen von der Gestalt und den Ausmaßen des Fahrzeugkühlers unabhängig sind.

Die Aufgabe wird erfindungsgemäß dadurch gelöst, dass der vorderste Querträger mindestens zwei übereinander, in etwa horizontal verlaufende und von einander beabstandete Platten umfasst, die den Kühler in Fahrtrichtung durchsetzen und vor dem Kühler über eine Abschleppeinrichtung mit einander verbunden sind.

Im vorliegenden Zusammenhang dient die Abschleppeinrichtung der Befestigung einer Abschleppstange, einer Abschleppachse oder eines Abschleppseils am Kraftfahrzeug und kann technisch in unterschiedlicher Form ausgebildet sein. Die Aufzählung ist dabei nur beispielhaft und in keiner Weise abschließend gemeint. Im Weiteren wird von einem Abschleppmaul ausgegangen. Es ist jedoch auch denkbar, dass anstelle eines Abschleppmauls alternativ ein Stossfänger vorgesehen ist. Die Maßgabe der Erfüllung zukünftiger strengerer Abgasnormen erfordert eine Steigerung des Kühlervolumens. Die Ausdehnung der Kühlerfläche führt daher zu einer Verbreiterung der Kühler über die lichte Weite der beiden Fahrgestell-Längsträger hinaus. Werden die Lagerböcke für die Stoßfänger und/oder das Abschleppmaul seitlich an dem Kühler vorbeigeführt, entstehen zwangsläufig große Hebel für die Einleitung z. B. der Abschleppkräfte in die Längsträger des Fahrgestells. Wie an sich bekannt,
ist die Wasserkühlung bei gängigen Nutzfahrzeugen in einen kleinen Kühlmittelkreislauf und einen großen Kühlmittelkreislauf unterteilt. Während bei kaltem Motor das Kühlmittel im kleinen Kühlkreislauf lediglich in den Wänden des Motorblocks entlang geführt wird, wird bei Erreichen der Betriebstemperatur auch der große Kühlmittelkreislauf zugeschaltet. Die Kühlflüssigkeit durchströmt auch das Röhren- Lamellensystem des Kühlers. Zur besseren Abführung der Abwärme der Motorbauteile ist der Kühler an der Stirnseite der Fahrgestell-Längsträger angeordnet. Gleichzeitig gewährleistet die Erfindung aber auch eine möglichst zentrale Position des Abschleppmauls zwischen den beiden Längsträgern des Fahrgestells, ohne dass Kühlrohre oder -lamellen der Anordnung des Abschleppmauls oder eines das Abschleppmaul aufnehmenden Querträgers weichen müssen. An den vorderen Enden der Fahrgestell- Längsträger ist ein Querträger vorgesehen, der wenigstens zwei Platten umfasst, die derart horizontal und parallel zueinander verlaufen und voneinander beabstandet sind, dass sie den Kühler in Fahrtrichtung gesehen nach vorne durchbrechen können. Die Platten des Querträgers treten zwischen den Kühllamellen des Kühlers hindurch. Auf der Rückseite des Kühlers sind die Platten über Flansche an den Fahrgestell-Längsträgern befestigt. Auf der gegenüberliegenden Vorderseite des Kühlers greifen die Platten am Abschleppmaul an und werden von diesem in einem bestimmten Abstand zueinander gehalten. In Abhängigkeit von der vertikalen Höhe des Abschleppmauls und/oder der Profilhöhe der Längsträger können die Platten zwischen Abschleppmaul und Längsträgern parallel zueinander oder aber in einem Winkel zueinander verlaufen. Der Abstand zwischen den Platten des Querträgers ist so ausgebildet, dass wenigstens eine Kühllamelle des Kühlers zwischen den Platten hindurchgeführt werden kann. Die von einander beabstandeten Platten können zusätzlich zur Aufnahme von Kühllamellen vorbereitet sein. Es ist jedoch auch denkbar, die Kühllamellen stellenweise mit geringerem Durchmessern zu versehen, damit an diesen Stellen die Platten durch den Kühler hindurchgeführt werden können. Trotz der Durchbrechung des Kühlers durch die Platten des Querträgers ist eine Durchbrechung des Kühlkreislaufes nicht erforderlich, weshalb der Kühler einteilig ausgeführt sein kann. Grundsätzlich kann die vorliegende Erfindung aber auch mit einem mehrteiligen Kühler realisiert werden. Das Fangmaul kann als Guss- oder Schmiedeteil ausgebildet sein und für Wartungszwecke des Kühlers abmontiert werden. Zur verbesserten Anströmung der hinter dem Abschleppmaul angeordneten Kühllamellen kann das Abschleppmaul mit Durchbrüchen versehen werden. Die Platten des Querträgers können lösbar oder unlösbar mit dem Abschleppmaul verbunden sein. Zur gegenseitigen Befestigung können die Platten am Abschleppmaul angeschmiedet, angegossen, angenietet öder angeschweißt sein. Auf der Rückseite des Kühlers bilden die Flansche eine lösbare oder unlösbare Verbindung zwischen den Platten und den Längsträgern. Die Flansche können als Gusselemente, Schweißgruppierung oder als geschmiedete Bauteile ausgebildet sein und zusätzlich Aufnahmen für die achsführenden Elemente aufweisen. Ein Vorteil der Erfindung besteht darin, dass der Kühler mehrteilig mit getrennten Wasserkästen ausführbar ist.

In einer anderen Ausführungsform der Erfindung kann das Abschleppmaul symmetrisch oder asymmetrisch zwischen den Längsträgern des Fahrgestells angeordnet sein. Vorzugsweise ist das Abschleppmaul oberhalb oder unterhalb einer Ebene angeordnet, die horizontal durch die Längsträger verläuft. Die Anbringung der Platten kann mittig oder außermittig zu den Längsträgern erfolgen. Vorstellbar ist darüber hinaus, dass die Platten des Querträgers über Lagerböcke an den Längsträgern befestigt sind. Der Vorteil der Konstruktion besteht darin, dass sich die Abschleppkräfte zu gleichen Teilen auf die beiden Längsträger verteilen oder gezielt in einen der Längsträger eingeleitet werden können.

In einer zusätzlichen Ausführungsform der Erfindung bilden die Platten des Querträgers, das Abschleppmaul und der Kühler eine bauliche Einheit.

Zur Förderung der modularen Bauweise kann eine bauliche Einheit die Platten, die Flansche, das Abschleppmaul und den Kühler umfassen oder aber zusätzlich noch einen Lüfter mit aufnehmen.

Denkbar ist es jedoch auch, dass die bauliche Einheit aus den Platten und den Flanschen zwischen den Platten und den Längsträgern sowie dem Kühler gebildet wird.

Die Stabilität des Abschleppmauls kann somit durch die entsprechende Ausbildung der baulichen Einheit der Schwere des Nutzfahrzeugs angepasst werden.

Nach einer weiteren Ausführungsform der Erfindung können die Platten der Querträger in Form eines Dreiecks oder in Trapezform ausgebildet sein und in der Ebene der Längsträger des Fahrgestells oder achsparallel zu diesen verlaufen. Hierdurch wird erreicht, dass die Platten je nach Vorgabe des Nutzfahrzeugherstellers gegossen oder geschmiedet werden können.

In einer weiteren Ausführungsform der Erfindung kann an den vorderen Enden der Längsträger ein weiterer Querträger vorgesehen sein und über Gusselemente mit den Längsträgern oder dem erfindungsgemäßen Querträger verbunden sein. Auf diese Weise ist es möglich, in der Fahrzeugfront ein weiteres erfindungsgemäßes Abschleppmaul vorzusehen.

Der weitere Querträger kann in einer abweichenden Variante oberhalb der voneinander beabstandeten Platten positioniert sein. Er weist dabei die Form eines Rohrprofils auf und überspannt die obere Platte bogenförmig in Form eines Halbkreises. Der weitere Querträger kann die Fahrerhauslagerung tragen und dient darüber hinaus der Quer- und/oder der Längsführung des Fahrerhauses. Vorstellbar ist auch, dass der weitere Querträger als Lagerbock für den Kühler, die Stossdämpfer oder die Feder- Dämpferbeine des Fahrerhauses dient. Ein ringförmig ausgebildeter weiterer Querträger ermöglicht eine Platz sparende Aufnahme des Lüfters innerhalb des Querträgerrings.

In einer anderen Ausführungsform können die Platten an den Flanschen der Fahrgestell-Längsträger befestigt sein. Die Flansche werden dabei z.B. an horizontalen oder vertikalen Wänden von Hohlprofil-Längsträgern angebracht. Der Vorteil besteht darin, dass der Längsträger mit dem daran angeordneten Flansch im Baukastenprinzip vorgefertigt werden kann.

Eine zusätzliche Ausführungsform der Erfindung sieht vor, dass zur Gewichtserleichterung in den Platten des Querträgers Durchbrüche vorgesehen sind. In vorteilhafter Weise können die Durchbrüche auch dem Durchtritt von Kabelverbindungen dienen.

Weitere vorteilhafte Ausgestaltungen und zweckmäßige Fortbildungen der Erfindung sind aus den nachstehenden Beispielsbeschreibungen anhand der Zeichnung näher entnehmbar.

In der Zeichnung zeigen:
Fig. 1 in perspektivischer Darstellung die Fahrgestell-Längsträger mit dem Kühler und den Platten des Querträgers und
Fig. 2 in seitlicher Darstellung einen Längsträger mit den Platten, die den Kühler durchbrechen.

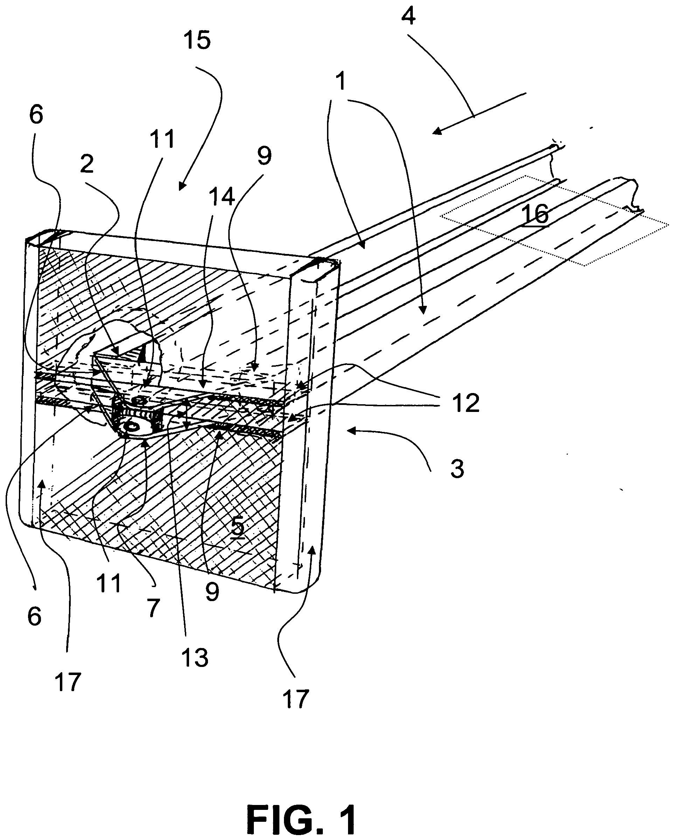

Fig. 1 zeigt in perspektivischer Darstellung die Längsträger 1 eines Fahrgestellrahmens 15 eines Nutzfahrzeugs. Am vorderen Ende 3 der Längsträger 1 ist ein vorderer Querträger 2 erkennbar. In Fahrtrichtung 4 gesehen vor dem Querträger 2 ist der Kühler 5 angeordnet. Der Querträger 2 umfasst erfindungsgemäß die Platten 6, die den Kühler 5 durchbrechen und in Fahrtrichtung 4 gesehen vor dem Kühler 5 am Abschleppmaul 7 befestigt sind. Entgegen der Fahrtrichtung 4 sind die Platten 6 über Flansche 9 mit den Längsträgern 1 verbunden. In Fig. 1 verlaufen die Platten 6 in einem Abstand 13 zueinander in etwa horizontal bzw. achsparallel zu einer gedachten und durch die Längsträger 1 verlaufenden Ebene 16. Aufgrund des Abstandes 13, den die Platten 6 des Querträgers 2 zueinander einnehmen verlaufen quer zur Fahrtrichtung 4 zwischen den Platten 6 horizontale Kühllamellen 12, die die beiden Wasserkästen 17 des Kühlers 5 miteinander verbinden. In den Platten 6 des Querträgers 2 sind Durchbrüche 11 vorgesehen, die in Fig. 1 einen nicht dargestellten Kupplungszapfen aufnehmen können. Die Kanten 14 der Platten 6 des Querträgers 2 verlaufen in der Darstellung der Fig. 1 linear. Die parallel zueinander angeordneten Platten 6 sind über Flansche 9 mit den Längsträgern 1 verbunden und durchbrechen den Kühler 5, indem sie zwischen Kühllamellen 12 durch den Kühler 5 hindurchragen und sich in Fahrtrichtung 4 gesehen nach vorne verjüngen und vor dem Kühler 5 mit dem Abschleppmaul 7 verbunden sind.

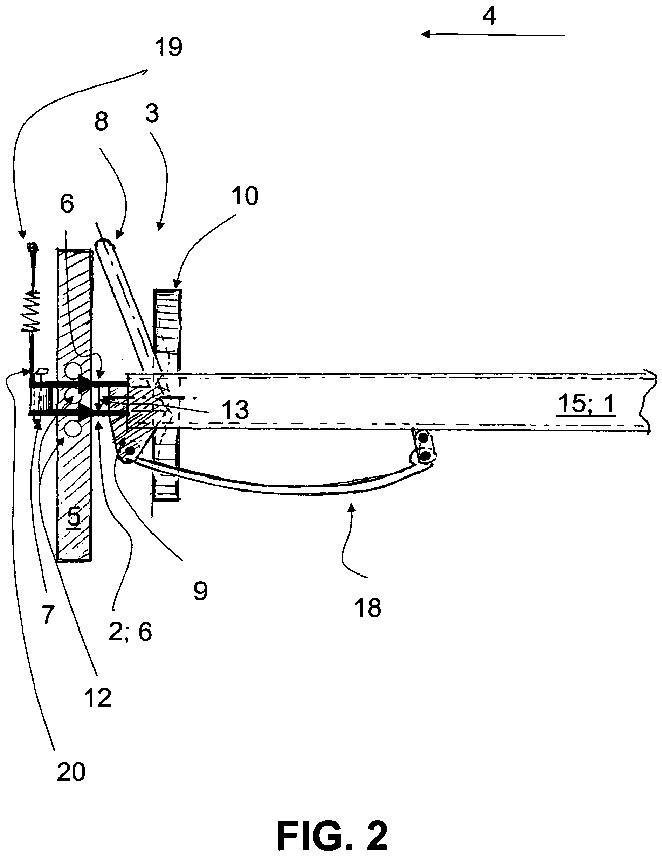

Fig. 2 zeigt in seitlicher Darstellung den Fahrgestellrahmen 15 mit einem Längsträger 1, an dessen vorderem Ende 3 ein quer zur Fahrtrichtung 4 verlaufender Querträger 2 erkennbar ist. Der Querträger 2 umfasst die beiden Platten 6, die parallel zueinander verlaufen und in Fahrtrichtung 4 vor dem Kühler 5 am Abschleppmaul 7 befestigt sind und hinter dem Kühler 5 über Flansche 9 mit den Längsträgern 1 in Verbindung stehen. Die Platten 6 des Querträgers 2 weisen einen Abstand 13 zueinander auf und durchragen den Kühler 5 in Fahrtrichtung 4 gesehen horizontal. Die Platten 6 treten dabei in Fahrtrichtung 4 zwischen den Kühllamellen 12 durch den Kühler 5 hindurch und werden vor dem Kühler 5 vom Abschleppmaul 7 gefasst. In Fahrtrichtung 4 gesehen hinter dem Kühler 5 ist ein weiterer Querträger 8 dargestellt, der über die Flansche 9 mit den Längsträgern 1 verbunden ist und in einem Winkel zu den Längsträgern 1 nach vorne geneigt ist. Die Flansche 9 können zusätzlich Anbindungspunkte für den Lüfter 10 aufweisen oder einer Blattfeder 18 als vordere Lagerung dienen. In Fahrtrichtung 4 gesehen vor dem Kühler 5 ist in Fig. 2 das Feder-Dämpferbein 19 des nicht dargestellten Fahrerhauses gezeigt. In Fig. 2 ist zusätzlich ein Dorn 20 dargestellt, der vertikal in die nicht gezeigten Durchbrüche 11 des Abschleppmauls 7 eingreift und eine nicht dargestellte Abschleppstange eines vorausfahrenden Fahrzeugs im Abschleppmaul 7 aufnimmt.

### Bezugsziffern:

- 1: Längsträger
- 2: Querträger
- 3: Vorderes Ende
- 4: Fahrtrichtung
- 5: Kühler
- 6: Platten
- 7: Abschleppmaul
- 8: Weitere Querträger
- 9: Flansch
- 10: Lüfter
- 11: Durchbruch
- 12: Kühllamelle
- 13: Abstand der Platten
- 14: Kanten der Platten
- 15: Fahrgestellrahmen
- 16: Ebene Längsträger
- 17: Wasserkasten des Kühlers
- 18: Blattfeder
- 19: Feder-Dämpfer-Bein
- 20: Dorn

## Patentansprüche

1. Nutzfahrzeug mit zwei Fahrgestell-Längsträgern (1), die durch Querträger (2) mit einander verbunden sind, und vor denen quer zur Fahrtrichtung (4) ein Kühler (5) angeordnet ist, **dadurch gekennzeichnet, dass** ein vorderster Querträger (2) mindestens zwei übereinander, in etwa horizontal verlaufende und von einander beabstandete Platten (6) umfasst, die den Kühler (5) in Fahrtrichtung (4) durchsetzen und vor dem Kühler (5) über eine Abschleppeinrichtung (7) mit einander verbunden sind.

2. Nutzfahrzeug nach Anspruch 1, **dadurch gekennzeichnet, dass** die Abschleppeinrichtung (7) etwa mittig zu den Fahrgestell-Längsträgern (1) angeordnet ist.

3. Nutzfahrzeug nach Anspruch 1, **dadurch gekennzeichnet, dass** die Abschleppeinrichtung (7) außermittig angeordnet ist.

4. Nutzfahrzeug nach Anspruch 1, **dadurch gekennzeichnet, dass** die Platten (6) des vordersten Querträgers (2) etwa in Form eines Dreiecks ausgebildet sind.

5. Nutzfahrzeug nach Anspruch 1, **dadurch gekennzeichnet, dass** die Platten (6) des vordersten Querträgers (2) etwa in Trapezform ausgebildet sind.

6. Nutzfahrzeug nach einem der vorhergehenden Ansprüche, **dadurch gekennzeichnet, dass** über dem vordersten Querträger (2) ein weiterer Querträger (8) vorgesehen ist.

7. Nutzfahrzeug nach Anspruch 6, **dadurch gekennzeichnet, dass** der weitere Querträger (8) bogenförmig über den Platten (6) angeordnet ist.

8. Nutzfahrzeug nach einem der vorhergehenden Ansprüche, **dadurch gekennzeichnet, dass** die Platten (6) an Flanschen (9) der Fahrgestell-Längsträger (1) befestigt sind.

9. Nutzfahrzeug nach einem der vorhergehenden Ansprüche, **dadurch gekennzeichnet, dass** in den Platten (6) Durchbrüche (10) vorgesehen sind.

10. Nutzfahrzeug nach Anspruch 1, **dadurch gekennzeichnet, dass** die Platten (6), die Abschleppeinrichtung (7) und der Kühler (5) eine bauliche Einheit bilden.

11. Nutzfahrzeug nach Anspruch 1, **dadurch gekennzeichnet, dass** die Platten (6) und die Flansche (9) zwischen den Platten (6) und den Längsträgern (1) zusammen mit dem Kühler (5) eine bauliche Einheit bilden.

12. Nutzfahrzeug nach Anspruch 1, **dadurch gekennzeichnet, dass** die Platten (6), die Flansche (9), die Abschleppeinrichtung (7) und der Kühler (5) eine bauliche Einheit bilden.

13. Nutzfahrzeug nach Anspruch 1, **dadurch gekennzeichnet, dass** die Platten (6), die Flansche (9), die Abschleppeinrichtung (7), der Kühler (5) und ein Lüfter (10) des Motors eine bauliche Einheit bilden.

## Claims

1. Commercial vehicle having two chassis longitudinal carriers (1) which are connected to one another by way of crossmembers (2) and in front of which a radiator (5) is arranged transversely with respect to the driving direction (4), **characterized in that** a frontmost crossmember (2) comprises at least two plates (6) which run approximately horizontally above one another, are spaced apart from one another, penetrate the radiator (5) in the driving direction (4), and are connected to one another in front of the radiator (5) via a towing device (7) .

2. Commercial vehicle according to Claim 1, **characterized in that** the towing device (7) is arranged approximately centrally with respect to the chassis longitudinal carriers (1).

3. Commercial vehicle according to Claim 1, **characterized in that** the towing device (7) is arranged eccentrically.

4. Commercial vehicle according to Claim 1, **characterized in that** the plates (6) of the frontmost crossmember (2) are configured approximately in the shape of a triangle.

5. Commercial vehicle according to Claim 1, **characterized in that** the plates (6) of the frontmost crossmember (2) are configured approximately in a trapezoidal shape.

6. Commercial vehicle according to one of the preceding claims, **characterized in that** a further crossmember (8) is provided above the frontmost crossmember (2).

7. Commercial vehicle according to Claim 6, **characterized in that** the further crossmember (8) is arranged in an arcuate manner above the plates (6).

8. Commercial vehicle according to one of the preceding claims, **characterized in that** the plates (6) are fastened to flanges (9) of the chassis longitudinal carriers (1).

9. Commercial vehicle according to one of the preceding claims, **characterized in that** apertures (10) are provided in the plates (6).

10. Commercial vehicle according to Claim 1, **characterized in that** the plates (6), the towing device (7) and the radiator (5) form one structural unit.

11. Commercial vehicle according to Claim 1, **characterized in that** the plates (6) and the flanges (9) between the plates (6) and the longitudinal carriers (1) form one structural unit together with the radiator (5).

12. Commercial vehicle according to Claim 1, **characterized in that** the plates (6), the flanges (9), the towing device (7) and the radiator (5) form one structural unit.

13. Commercial vehicle according to Claim 1, **characterized in that** the plates (6), the flanges (9), the towing device (7), the radiator (5) and a fan (10) of the engine form one structural unit.

## Revendications

1. Véhicule utilitaire comprenant deux longerons de châssis (1) qui sont reliés l'un à l'autre par des traverses (2) et devant lesquels un radiateur (5) est disposé transversalement à la direction de conduite (4), **caractérisé en ce qu'**une traverse (2) la plus en avant comprend au moins deux plaques (6) s'étendant l'une au-dessus de l'autre approximativement horizontalement et espacées l'une de l'autre, qui traversent le radiateur (5) dans la direction de conduite (4) et qui sont connectées l'une à l'autre avant le radiateur (5) par le biais d'un dispositif de remorquage (7).

2. Véhicule utilitaire selon la revendication 1, **caractérisé en ce que** le dispositif de remorquage (7) est disposé approximativement centralement par rapport aux longerons de châssis (1).

3. Véhicule utilitaire selon la revendication 1, **caractérisé en ce que** le dispositif de remorquage (7) est disposé de manière excentrée.

4. Véhicule utilitaire selon la revendication 1, **caractérisé en ce que** les plaques (6) de la traverse (2) la plus en avant sont réalisées approximativement en forme de triangle.

5. Véhicule utilitaire selon la revendication 1, **caractérisé en ce que** les plaques (6) de la traverse (2) la plus en avant sont réalisées approximativement sous forme trapézoïdale.

6. Véhicule utilitaire selon l'une quelconque des revendications précédentes, **caractérisé en ce qu'**une traverse supplémentaire (8) est prévue au-dessus de la traverse (2) la plus en avant.

7. Véhicule utilitaire selon la revendication 6, **caractérisé en ce que** la traverse supplémentaire (8) est disposée sous forme arquée au-dessus des plaques (6).

8. Véhicule utilitaire selon l'une quelconque des revendications précédentes, **caractérisé en ce que** les plaques (6) sont fixées au niveau de brides (9) des longerons de châssis (1).

9. Véhicule utilitaire selon l'une quelconque des revendications précédentes, **caractérisé en ce que** des orifices (10) sont prévus dans les plaques (6) .

10. Véhicule utilitaire selon la revendication 1, **caractérisé en ce que** les plaques (6), le dispositif de remorquage (7) et le radiateur (5) constituent une unité structurelle.

11. Véhicule utilitaire selon la revendication 1, **caractérisé en ce que** les plaques (6) et les brides (9) entre les plaques (6) et les longerons (1) forment une unité structurelle conjointement avec le radiateur (5) .

12. Véhicule utilitaire selon la revendication 1, **caractérisé en ce que** les plaques (6), les brides (9), le dispositif de remorquage (7) et le radiateur (5) forment une unité structurelle.

13. Véhicule utilitaire selon la revendication 1, **caractérisé en ce que** les plaques (6), les brides (9), le dispositif de remorquage (7), le radiateur (5) et un ventilateur (10) du moteur forment une unité structurelle.
